# DEMANDE DE BREVET EUROPEEN

(11) **EP 0 538 093 A1**
(43) Date de publication de la demande: **21.04.1993**
(21) Numéro de dépôt: 92402712.1
(22) Date de dépôt: 05.10.1992
(51) Int. Cl.: B60S 1/04, B60S 1/32

(54) **Essuie-glace caréné, notamment pour véhicule automobile**

(30) Priorité: 14.10.1991 FR 9112624
(71) Demandeur: VALEO SYSTEMES D'ESSUYAGE, 78180 Montigny-Le-Bretonneux (FR)
(72) Inventeur: Raymond, Bernard, F-75019 Paris (FR)
(74) Mandataire: Gamonal, Didier

(57) **Abrégé**

L'invention concerne un essuie-glace caréné.

L'essuie-glace comprend un porte-balai (10), un balai (12) monté sur le porte-balai et un capot de carénage (14) à section en U recouvrant le balai sur toute sa longueur et comportant des moyens de guidage (52,58) pour empêcher tout débattement latéral du balai (12) par rapport au capot de carénage (14).

L'invention est applicable notamment à l'essuyage d'un pare-brise ou d'une glace arrière d'un véhicule automobile.

## Description

L'invention concerne un essuie-glace caréné destiné à l'essuyage d'une surface vitrée, notamment à un pare-brise ou une glace arrière de véhicule automobile.

On connaît déjà des essuie-glace carénés comprenant un porte-balai, un balai monté sur le porte-balai et un capot de carénage en section en U recouvrant le balai sur au moins une partie de sa longueur.

Le capot de carénage est destiné à protéger le balai et le porte-balai vis-à-vis des agents extérieurs et aussi à améliorer l'aérodynamisme de l'essuie-glace.

Dans un essuie-glace connu de ce genre, le capot de protection recouvre le porte-balai sur toute sa longueur et le balai sur une partie de sa longueur. Il en résulte que le balai n'est pas complètement protégé à l'égard des agents extérieurs.

Cet essuie-glace connu a aussi pour inconvénient que le balai risque de frotter et cogner contre l'intérieur du capot de carénage, d'où il résulte des frottements et bruits désagréables.

On connaît aussi, d'après le document EP-A-0 280 149, un essuie-glace caréné dans lequel le capot de carénage sert en même temps de porte-balai et recouvre le balai sur toute sa longueur.

Cet essuie-glace caréné présente le même inconvénient que mentionné précédemment, à savoir que le balai risque de cogner à l'intérieur du capot de carénage, d'où il résulte des frottements et bruits désagréables.

L'invention a notamment pour but de surmonter les inconvénients mentionnés ci-dessus.

Elle propose en conséquence un essuie-glace caréné, du type comprenant un porte-balai, un balai monté sur le porte-balai etun capot de carénage à section en U recouvrant le balai sur au moins une partie de sa longueur.

Conformément à l'invention, le capot de carénage recouvre le balai sur toute sa longueur et comporte des moyens de guidage pour empêcher tout débattement latéral du balai par rapport au capot.

Ainsi, le balai se trouve complètement à l'abri des agents extérieurs et ne risque pas de venir cogner contre l'intérieur du capot de carénage et engendrer ainsi des vibrations et bruits désagréables.

Grâce aux moyens de guidage précités, le balai peut seulement se débattre dans un plan sensiblement normal à la surface vitrée à essuyer.

L'invention s'applique en particulier à un essuie-glace dans lequel le capot de carénage comprend deux ailes espacées qui dépendent d'un fond et dans lequel le balai comprend une monture supportant une lame par l'intermédiaire de palonniers.

Conformément à l'invention, les moyens de guidage comprennent au moins une paire d'enfoncements dirigés en vis-à-vis, formés respectivement dans les deux ailes du capot et propres à venir en coopération de butée avec la monture et/ou un palonnier du balai, de part et d'autre de ce dernier.

On obtient ainsi un excellent guidage du balai à l'intérieur du capot de protection.

Dans une forme de réalisation préférée de l'invention, le capot de carénage comprend deux paires d'enfoncements propres à coopérer respectivement avec deux régions d'extrémités du balai. De préférence, chacune des deux paires d'enfoncements est propre à coopérer avec un palonnier d'extrémité du balai.

Selon une autre caractéristique de l'invention, chacun des enfoncements est obtenu par déformation locale d'une aile du capot de carénage pour former une zone de butée plane.

De préférence, le capot de carénage recouvre aussi le porte-balai sur toute sa longueur, ce qui permet de protéger complètement à la fois le porte-balai et le balai.

Selon une autre caractéristique de l'invention, le fond du capot de carénage comprend des moyens de clipsage pour assurer la solidarisation du capot sur le porte-balai.

Dans une autre variante de réalisation, le capot de carénage constitue en même temps le porte-balai.

Selon une autre caractéristique de l'invention, le capot de carénage est avantageusement formé d'une seule pièce par moulage d'une matière plastique renforcée.

Dans la description qui suit, faite seulement à titre d'exemple, on se réfère au dessin annexé, sur lequel :
- la figure 1 est une vue en élévation d'un essuie-glace caréné selon l'invention;
- la figure 2 est une vue en coupe, à échelle agrandie, selon la ligne II-II de la figure 1; et
- la figure 3 est une vue en coupe, à échelle agrandie, selon la ligne III-III de la figure 1.

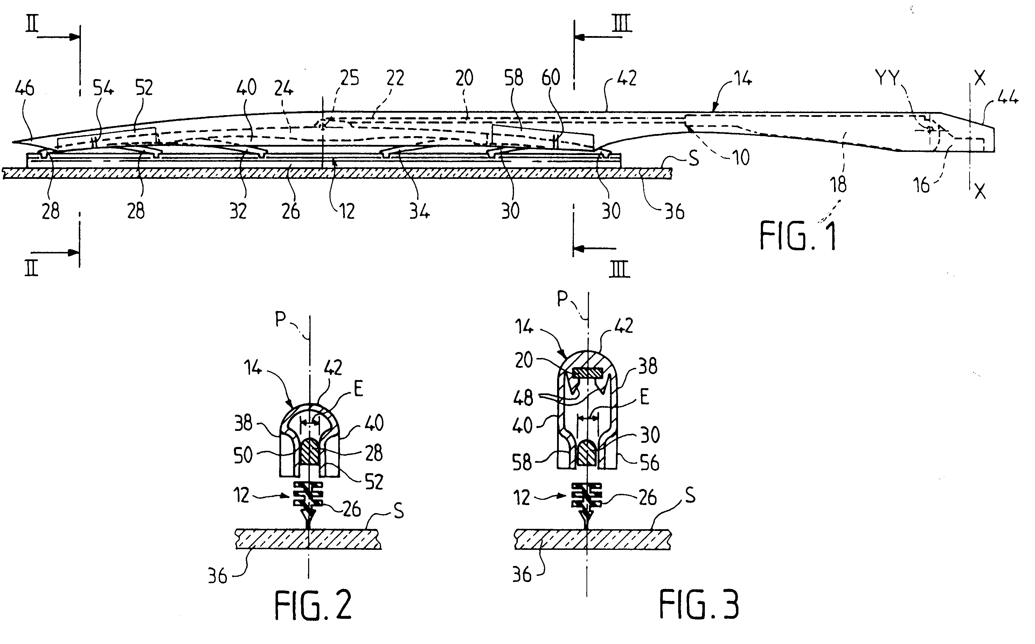

L'essuie-glace caréné représenté à la figure 1 comprend un porte-balai 10, un balai 12 monté sur le porte-balai 10 et un capot de carénage 14, à section en U, recouvrant complètement le porte-balai 10 et le balai 12.

Le porte-balai 10 comprend une tête 16 propre à être entraînée en rotation en sens alternés autour d'un axe XX par l'intermédiaire d'un arbre d'entraînement (non représenté). Sur la tête 16 est monté à pivotement, autour d'un axe YY orthogonal à l'axe XX, un carter 18 de forme allongée. Le carter 18 se prolonge par un bras 20 dont l'extrémité libre 22 supporte à articulation le balai 12.

Le balai 12 comprend une monture 24 constituée par un profil en U comportant, dans sa partie centrale, une ouverture (non représentée) permettant le passage de l'extrémité libre 22 du bras 20. L'extrémité 22 est articulée sur la monture 24 par l'intermédiaire d'un pivot 25 de la monture 24.

La monture 24 supporte une lame souple 26 par l'intermédiaire de palonniers. Dans l'exemple, la lame 26 est portée par deux palonniers d'extrémités 28 et 30 et par deux palonniers intermédiaires 32 et 34. La lame 26 est propre à essuyer une surface vitrée S d'une vitre 36, par exemple d'un pare-brise ou d'une glace arrière d'un véhicule automobile.

La structure du porte-balai 10 et celle de la lame 26, telles qu'elles viennent d'être décrites précédemment, sont connues.

Le capot de carénage 14, à section transversale en forme de U, comprend deux ailes espacées 38 et 40 (figures 2 et 3) qui sont sensiblement parallèles entre elles et qui se rattachent à un fond 42 de forme générale semi-circulaire. Le capot 14 s'étend sur toute la longueur de l'essuie-glace et recouvre totalement le porte-balai 10 et la lame 26. Il comporte une première extrémité 44 qui recouvre la tête 16 et une seconde extrémité 46, en forme de pointe, qui recouvre l'extrémité de la lame 26 qui est la plus éloignée de la tête 16. La section en U du capot 14 est évolutive en ce sens que la hauteur des ailes 38 et 40 varie, tandis que la distance entre les deux ailes reste pratiquement la même.

Le capot de carénage 14 comprend, sur une partie de sa longueur, deux lèvres de clipsage 48 formées à partir de la paroi de fond 42 et dirigées vers l'intérieur de la section en U pour permettre la fixation du capot 14 sur le bras 20 du porte-balai 10 (figure 3). Si nécessaire, des moyens (non représentés) peuvent être prévus pour fixer également le capot 14 sur le carter 18.

Par contre, le capot 14 n'est pas fixé au balai 12 pour permettre le débattement de ce dernier dans une direction sensiblement perpendiculaire à la surface vitrée S.

Conformément à l'invention, le capot 14 comprend des moyens de guidage pour empêcher le débattement latéral du balai 12, c'est-à-dire dans une direction parallèle à la surface vitrée S.

Dans l'exemple, les moyens de guidage comprennent, au voisinage de l'extrémité 46 du capot, une paire d'enfoncements 50 et 52 obtenus par déformation locale, vers l'intérieur, des parois 38 et 40, respectivement (figure 2). Les enfoncements 50 et 52 en vis-à-vis sont plus rapprochés que les ailes 38 et 40 et ménagent entre eux un espacement E légèrement supérieur à la largeur du palonnier 28 (figure 2). Comme montré aux figures 1 et 2, les enfoncements 50 et 52 ont une forme générale rectangulaire et s'étendent dans la région du palonnier 28, respectivement de part et d'autre de celui-ci. Les enfoncements 50 et 52 forment ainsi deux surfaces de guidage en regard qui s'étendent parallèlement entre elles et qui permettent au palonnier 28 de se débattre librement dans un plan P (figure 2) qui s'étend parallèlement aux ailes 38 et 40 et perpendiculairement à la surface vitrée S à essuyer.

En outre, les enfoncements 50 et 52 sont renforcés chacun par une nervure intermédiaire, par exemple la nervure 54 visible sur la figure 1.

Le capot 14 comprend une seconde paire d'enfoncements 56 et 58 analogues aux enfoncements 50 et 52. Les enfoncements 56 et 58 sont obtenus par déformation locale des ailes 38 et 40 respectivement. Les enfoncements 56 et 58 se situent dans la région de l'autre extrémité du balai 12 et sont propres à coopérer en butée avec le palonnier 30 (figure 3). Les enfoncements 56 et 58ménagent entre eux un espacement E identique à celui que ménagent les enfoncements 50 et 52. Là encore, les enfoncements 56 et 58 ont une forme générale rectangulaire et sont renforcés chacun par une nervure, par exemple la nervure 60 pour l'enfoncement 58 (figure 1). On comprendra que, grâce à la paire d'enfoncements 50 et 52 et à la paire d'enfoncements 56 et 58, le balai 12 est parfaitement guidé à l'intérieur du capot 14 et peut ainsi se débattre librement dans un plan perpendiculaire à la surface vitrée à essuyer. Les deux paires d'enfoncements s'opposent au débattement latéral du balai 12 et empêchent ainsi la production de cognements ou bruits parasites. Par ailleurs, comme le capot 14 s'étend sur toute la longueur de l'essuie-glace et qu'il recouvre complètement le porte-balai 10 et le balai 12, il protège ces derniers vis-à-vis des agents extérieurs, tout en contribuant à un bon aérodynamisme de l'ensemble.

Le capot de carénage 14 est avantageusement obtenu de moulage, d'une seule pièce, à partir d'une matière plastique renforcée.

Dans une variante de réalisation non représentée, le capot de protection 14 peut constituer en même temps le porte-balai. Dans ce cas, il suffit de prévoir des moyens pour le maintien du balai 12 à l'intérieur du capot de carénage.

L'essuie-glace caréné de l'invention est destiné en particulier aux véhicules automobiles pour l'essuyage du pare-brise ou de la glace arrière.

## Revendications

**1.-** Essuie-glace caréné, comprenant un porte-balai (10), un balai (12) monté sur le porte-balai (10) et un capot de carénage (14) à section en U recouvrant le balai (12) sur au moins une partie de sa longueur, caractérisé en ce que le capot de carénage (14) recouvre le balai sur toute sa longueur et comporte des moyens de guidage (50,52,56,58) pour empêcher tout débattement latéral du balai (12) par rapport au capot de carénage (14).

**2.-** Essuie-glace selon la revendication 1, dans lequel le capot de carénage (14) comprend deux ailes espacées (38,40) qui dépendent d'un fond (42) et dans lequel le balai (12) comprend une monture (24) supportant une lame (26) par l'intermédiaire de palonniers (28,30,32,34), caractérisé en ce que les moyens de guidage comprennent au moins une paire d'enfoncements (50,52;56,58) dirigés en vis-à-vis, formés respectivement dans les deux ailes (38,40) du capot de carénage (14) et propres à venir en coopération de butée avec la monture (24) et/ou un palonnier (28,30) du balai, de part et d'autre de ce dernier.

**3.-** Essuie-glace selon la revendication 2, caractérisé en ce que le capot de carénage (14) comprend deux paires d'enfoncements (50,52;56,58) propres à coopérer respectivement avec deux régions d'extrémités du balai (12).

**4.-** Essuie-glace selon la revendication 3, caractérisé en ce que chacune des deux paires d'enfoncement (50,52;56,58) est propre à coopérer avec un palonnier d'extrémité (28;30) du balai (12).

**5.-** Essuie-glace selon l'une des revendications 2 à 4, caractérisé en ce que chacun des enfoncements (50,52,56,58) est obtenu par déformation locale d'une aile (38,40) du capot de carénage (14) pour former une zone de butée plane.

**6.-** Essuie-glace selon l'une des revendications 1 à 5, caractérisé en ce que le capot de carénage (14) recouvre aussi le porte-balai (10) sur toute sa longueur.

**7.-** Essuie-glace selon les revendications 2 et 6, caractérisé en ce que le fond (42) du capot du carénage comprend des moyens de clipsage (48) pour assurer la solidarisation du capot sur le porte-balai (10).

**8.-** Essuie-glace selon la revendication 1, caractérisé en ce que le capot de carénage (14) constitue en même temps le porte-balai de l'essuie-glace.

**9.-** Essuie-glace selon l'une des revendications 1 à 8, caractérisé en ce que le capot de carénage (14) est formé d'une seule pièce par moulage d'une matière plastique renforcée.
